# EUROPÄISCHE PATENTSCHRIFT

(11) **EP 1 899 995 B1**
(45) Veröffentlichungstag und Bekanntmachung des Hinweises auf die Patenterteilung: **15.06.2011**
(21) Anmeldenummer: 06763965.8
(22) Anmeldetag: 29.06.2006
(51) Int. Cl.: H01F 1/44, F16F 9/53

(54) **MAGNETORHEOLOGISCHE FLÜSSIGKEIT**
MAGNETORHEOLOGICAL LIQUID
LIQUIDE MAGNÉTO-RHÉOLOGIQUE

(30) Priorität: 30.06.2005 DE 102005030613
(43) Veröffentlichungstag der Anmeldung: 19.03.2008
(73) Patentinhaber: BASF SE, 67056 Ludwigshafen (DE)
(72) Erfinder: OETTER, Günter, 67227 Frankenthal (DE); LAUN, Martin, 68199 Mannheim (DE); PFISTER, Jürgen, 67346 Speyer (DE); LOCHTMAN, Rene, 68161 Mannheim (DE); LIPPERT, Gerald, 68623 Lampertheim (DE); MAAS, Heiko, 68165 Mannheim (DE)
(86) Internationale Anmeldenummer: PCT/EP2006/063702
(87) Internationale Veröffentlichungsnummer: WO 2007/003580

(56) Entgegenhaltungen:
- US-A- 5 645 752
- US-A1- 2004 084 263
- US-A1- 2004 119 045

## Beschreibung

Die vorliegende Erfindung betrifft magnetorheologische Flüssigkeiten, ein Verfahren zu deren Herstellung und deren Verwendung.

Als magnetorheologische Flüssigkeiten (Abkürzung: MRF) bezeichnet man generell Flüssigkeiten, welche ihre rheologischen Eigenschaften unter der Einwirkung eines magnetischen Feldes verändern. Dabei handelt es sich zumeist um Suspensionen von ferromagnetischen, superparamagnetischen oder paramagnetischen Teilchen in einer Trägerflüssigkeit (häufig auch als Basisöl bezeichnet).

Wird eine solche Suspension einem Magnetfeld ausgesetzt, nimmt ihr Fließwiderstand zu. Dies wird dadurch verursacht, dass die dispergierten magnetisierbaren Teilchen, beispielsweise Eisenpulver, auf Grund Ihrer magnetischen Wechselwirkung kettenartige Strukturen parallel zu den Magnetfeldlinien ausbilden. Während der Verformung einer MRF werden diese Strukturen partiell zerstört, bilden sich aber wieder zurück. Die rheologischen Eigenschaften einer magnetorheologischen Flüssigkeit in einem Magnetfeld ähneln den Eigenschaften eines plastischen Körpers mit Fließgrenze, d. h. es muss eine Mindestschubspannung aufgewendet werden, um die magnetorheologische Flüssigkeit zum Fließen zu bringen.

Magnetorheologische Flüssigkeiten gehören zur Gruppe der nicht-newtonschen Flüssigkeiten. Wegen ihrer Fließgrenze ändert sich die Viskosität stark mit der eingeprägten Scherrate. Die reversible Viskositätsänderung durch Einprägen eines Magnetfelds kann innerhalb von Millisekunden erfolgen.

Das rheologische Verhalten einer magnetorheologischen Flüssigkeit kann näherungsweise durch ein Bingham-Modell beschrieben werden, dessen Fließgrenze mit wachsender Magnetfeldstärke zunimmt. Es können z. B. Schubspannungswerte von einigen Zehntausend N/m² bei magnetischen Flussdichten unter einem Tesla erzielt werden. Hohe übertragbare Schubspannungen sind erforderlich für den Einsatz magnetorheologischer Flüssigkeiten in Vorrichtungen wie Dämpfern, Kupplungen, Bremsen und anderen steuerbaren Geräten (z.B. Haptic Devices, Crashabsorbern, Steer-by-Wire-Lenksystemen, Gear- und Brake-by-Wire-Systemen, Dichtungen, Haltesystemen, Prothesen, Fitnessgeräten oder Lager).

Die übertragbare Schubspannung einer magnetorheologischen Flüssigkeit steigt dabei mit dem Volumenanteil der magnetisierbaren Partikel. Für einzelne Anwendungen sind dabei durchaus Volumen- bzw. Gewichtsanteile der magnetisierbaren Partikel von 90% und mehr anzustreben. In diesen Fällen müssen die einzelnen Komponenten in der Formulierung, in erster Linie Basisöl, Dispergiermittel, Verdicker und Eisenpartikel (Oberflächencharakter) so aufeinander abgestimmt sein, dass trotz der hohen Volumenanteile an magnetisierbaren Partikeln die Handhabbarkeit der Dispersion gewährleistet ist. Darunter versteht man einerseits die Fließfähigkeit der Formulierungen über einen breiten Temperaturbereich von ungefähr -40 °C bis 200 °C, was insbesondere für eine Anwendung im Automobilbereich entscheidend ist. Anzustreben sind ein möglichst niedriges Viskositätsniveau ohne Einwirkung eines Magnetfeldes, eine möglichst hohe Fließgrenze unter Feld, ein geringes Sedimentationsverhalten der magnetisierbaren Partikel, eine geringe Aggregationstendenz und eine leichte Redispergierbarkeit nach Sedimentation.

Aus der WO 01/03150 A1 sind magnetorheologische Formulierungen bekannt, die neben einem Trägeröl magnetorheologische Partikel mit einem mittleren Durchmesser von 0,1 bis 1000 µm enthalten. Darüber hinaus enthält die magnetorheologische Flormulierung ein Schichtsilikat, das sich vom Bentonit-Typ ableitet. Diese hydrophob modifizierten Schichtsilikate werden zur Verhinderung rascher Sedimentation verwendet. Allerdings werden gemäß der WO 01/03150 A1 große Mengen an Schichtsilikat verwendet, was aufgrund des eingeschränkten Fließverhaltens bei Tieftemperaturanwendungen nachteilig ist.

Weitere magnetorheologische Formulierungen sind in US-A 2004/0084 263 offenbart. Diese magnetorheologische Formulierungen enthalten mindestens einen Poly-alphaolefn- Basisöl, mindestens einen magnetisierbares Eisenpulver, mindestens ein Dispergiermittel wie Stearinsäure sowie mindestens ein Thixotropiermittel auf Basis von Bentonit (Schichtsilikat).

US 5,683,615 beschreibt die Verwendung von Thiophosphor- und/oder Thiocarbamat-Verbindungen als Dispergiermittel für magnetisierbare Partikel zur Verbesserung der Kolloidstabilität.

US 5,667,715 betrifft eine Mischung aus großen und kleinen Eisenpartikeln, um das Viskositätsverhältnis mit und ohne Magnetfeld zu maximieren. Dabei werden zusätzlich als Verdicker Siliziumdioxide verwendet. Als Dispergiermittel werden Tenside wie ethoxylierte Alkylamine genannt. Das Verhältnis der großen zu den kleinen Eisenpartikeln beträgt 5 bis 10 zu 1.

WO 02/25674 beschreibt unter Verwendung großer Mengen an Verdicker eine magnetorheologische Paste, um die Sedimentationsstabilität zu verbessern. Erfahrungsgemäß sind solche Formulierungen jedoch wegen des hohen Fließwiderstandes für Tieftemperaturanwendungen ungeeignet.

EP 0 845 790 beschreibt die Verwendung von mit synthetischen Polymeren und Zellulosederivaten beschichteten magnetischen Partikeln. Durch die Verwendung dieser speziellen synthetischen Polymere und Zellulosederivate soll die Sedimentationsstabilität, Abrasivität und die Kolloidstabilität der resultierenden magnetorheologischen Formulierung verbessert werden. Trotzdem ist die zusätzliche Verwendung von Dispergiermitteln und Verdickungsmitteln in der Formulierung erforderlich.

Nachteilig an den bekannten magnetorheologischen Formulierungen ist, dass diese nur ein eingeschränktes Eigenschaftsprofil für die jeweiligen Anwendungsgebiete aufweisen.

So ist eine Vielzahl der bekannten magnetorheologischen Formulierungen nur bei Temperaturen bis 100 °C über einen längeren Zeitraum stabil, während bei höheren Temperaturen bis 150 °C eine ausreichende Stabilität nicht mehr gegeben ist. Unter stabil wird in diesem Zusammenhang verstanden, dass die anwendungstechnischen Eigenschaften sich in Folge von Temperaturbelastung nicht verschlechtern. Dieses sind einerseits die rheologischen Eigenschaften, d. h. das Fließverhalten, ohne Magnetfeld sowie unter Einfluss eines Magnetfeldes. Andererseits sollen die Proben nach längerer Temperaturbelastung keine Instabilitäten oder Inhomogenitäten zeigen, wie Agglomeration oder verstärkte Sedimentation, z. B. unter Bildung harter nicht mehr redispergierbarer Bodensätze.

Die bekannten magnetorheologischen Formulierungen sind bei Temperaturen von bis zu -30 °C bereits ohne Anlegen eines Magnetfeldes zu hochviskos, erstarren amorph oder kristallisieren.

Ein weiterer Nachteil der aus dem Stand der Technik bekannten magnetorheologischen Formulierungen ist, dass diese bei Temperaturzyklen keine reversiblen Formulierungseigenschaften zeigen.

Damit ergibt sich insgesamt ein Bedarf an magnetorheologischen Formulierungen, die über einen breiten Temperaturbereich stabil sind und über diesen gesamten Temperaturbereich reversible Formulierungseigenschaften zeigen.

Darüber hinaus sind magnetorheologische Formulierungen erwünscht, die, um eine breite Funktionsfähigkeit der Formulierung selbst bei hohen Partikelkonzentrationen von beispielsweise bis zu 90 Gew.-% zu gewährleisten, ohne Anlegen eines Magnetfeldes eine niedrige Viskosität auch bei niedrigen Temperaturen von -30 °C und darunter zeigen.

Ferner sind magnetorheologische Formulierungen erwünscht, die nach der Sedimentation der magnetisierbaren Partikel problemlos redispergierbar sind. Dabei sollen hochpigmentierte Formulierungen zur Gewährleistung hoher übertragbarer Schubspannungen bei Anlegen eines Magnetfeldes mit den zuvor genannten Eigenschaften erhalten werden.

Die bekannten magnetorheologischen Formulierungen erfüllen das zuvor umrissene Anforderungsprofil nicht in allen Punkten. Entweder ist die Redispergierbarkeit schlecht oder das Tieftemperaturfließverhalten im feldfreien Zustand ist nicht gegeben, was auf eine zu hohe Viskosität des Basisöls zurückzuführen sein kann oder auch an der nicht aufeinander abgestimmten Kompatibilität zwischen Öl, Dispergiermittel und Thixotropiermittel liegen kann, oder die Fließfähigkeit im gesamten Temperaturbereich wird nur dadurch erreicht, dass die Konzentration an magnetisierbaren Partikeln nicht zu hoch ist oder dadurch, dass weniger Thixotropiermittel eingesetzt wird, was wiederum auf Kosten der Sedimentationsstabilität geht.

Die Aufgabe der vorliegenden Erfindung ist es demgemäß, neue magnetorheologische Formulierungen bereitzustellen, welche ein für die genannten Anwendungen vorzugsweise gutes Eigenschaftsspektrum aufweisen und vorzugsweise die zuvor beschriebenen Nachteile der bekannten magnetorheologischen Formulierungen nicht aufweisen.

Gelöst wird diese Aufgabe von einer magnetorheologischen Formulierung.

Die erfindungsgemäße magnetorheologische Formulierung ist dann dadurch gekennzeichnet, dass sie die folgenden Bestandteile enthält:
a) mindestens ein Basisöl, das ausgewählt ist aus der Gruppe bestehend aus Dicarbonsäuredialkylester, basierend auf linearen oder verzweigten Fettsäuren mit Kettenlängen von C₄ bis C₁₀ und linearen oder verzweigten Alkoholen mit Kettenlängen von C₄ bis C₁₀; gesättigten Polyolestern, basierend auf Neopentylglykol, Trimethylolpropan oder Pentaerythrit; Poly-α-olefinen und Mischungen aus den oben genannten Dicarbonsäuredialkylestern und Poly-α-olefinen;
b) mindestens ein magnetisierbares Teilchen ausgewählt aus der Gruppe bestehend aus Eisenpulver, feinverteiltem Eisenpulver, wie Carbonyleisenpulver, gas- und wasserverdüstem Eisenpulver, gecoatetem Eisenpulver und Mischungen der zuvor genannten magnetisierbaren Teilchen;
c) mindestens ein Dispergiermittel ausgewählt aus der Gruppe bestehend aus Dispergiermitteln auf Polymerbasis und Alkylphosphorsäureestern von langkettigen Alkoholen oder von Alkoholethoxylaten der allgemeinen Formel

   Rₙ(EO)ₓ

   mit n = 4 bis 18 und x = 0 bis 20, besonders bevorzugt n = 6 bis 18 und x = 0 bis 10, insbesondere n = 6 bis 18 und x = 0 bis 5; und
d) mindestens ein Thixotropiermittel auf der Basis von hydrophob modifizierten Schichtsilikaten, wobei der gehalt dieser Thixotropiermittels 0,1 bis 2 gew-% bezogen auf die Formulierung, beträgt.

In einer Ausführungsform der vorliegenden Erfindung besteht die erfindungsgemäße magnetorheologische Formulierung bevorzugt im Wesentlichen aus den zuvor genannten Bestandteilen.

Die bevorzugte Ausführungsformen bzw. Verwendungen der vorliegenden Erfindung werden in den abhängigen Ansprüche 2-7 und 10 bzw. im Anspruch 9 definiert. Der Anspruch 8 offenbart ein Verfahren zur Herstellung der erfindungsgemäßen magnetorheologischen Formulierung.

Nachfolgend werden die einzelnen Komponenten a) bis d), die in der erfindungsgemäßen magnetorheologischen Formulierung enthalten sind, näher definiert.

### Basisöl

Die erfindungsgemäße magnetorheologische Formulierung enthält als Öl, im folgenden als Basisöl bezeichnet, eine Verbindung ausgewählt aus der Gruppe, bestehend aus Dicarbonsäuredialkylester, basierend auf linearen oder verzweigten Fettsäuren mit Kettenlängen von C₄ bis C₁₀ und linearen oder verzweigten Alkoholen mit Kettenlängen von C₄ bis C₁₀; gesättigten Polyolestern, basierend auf Neopentylglykol, Trimethylolpropan oder Pentaerythrit; Poly-α-olefinen und Mischungen aus den oben genannten Dicarbonsäuredialkylestern und Poly-α-olefinen.

Es ist bevorzugt, wenn die vorstehend genannten Basisöle bzw. die Mischung der vorstehend genannten Basisöle einen Flammpunkt von größer als 150 °C und einen pour point von kleiner als -55 °C aufweisen. Vorzugsweise weist das Basisöl bzw. die Basisöl-Mischung einen Wassergehalt von weniger als 0,5 %, besonders bevorzugt von weniger als 0,1 %, auf. Ferner weist das Basisöl bzw. die Basisöl-Mischung eine Viskosität von vorzugsweise kleiner als 5000 mm²/s, besonders bevorzugt kleiner als 3000 mm²/s, insbesondere kleiner als 2000 mm²/s, jeweils bei einer Temperatur von -40 °C, auf. Gleichzeitig weist das Basisöl eine hohe chemische Stabilität bei hoher Temperatur in Gegenwart von Eisen und Luft auf, so dass eine optimale Anwendung über einen breiten Temperaturbereich gegeben ist.

Das Basisöl bzw. die Basisöl-Mischung bildet die kontinuierliche Phase der magnetorheologischen Flüssigkeit.

Wenn als Basisöl ein Diester basierend auf kurzkettigen Fettsäuren verwendet wird, so handelt es sich vorzugsweise um Diester der Emkarate^{®}-Marken und der Priolube^{®}-Marken der Firma Uniqema, z.B. Emkarate^{®}1080 und Emkarate^{®}1090 und Priolube^{®}1859, Priolube^{®}3958 und Priolube^{®}3960.

Wenn ein Diester basierend auf langkettigen Fettsäuren verwendet wird, so ist es bevorzugt, wenn Diester der Priolube^{®}-Marken der Firma Uniqema verwendet werden, z.B. Priolube^{®}3967.

Ein weiterer geeigneter Diester ist unter dem Handelsnamen Glissofluid^{®} A9 bekannt. Hierbei handelt es sich um Adipinsäuredinonylester.

Weitere geeignete Diester sind Sebacinsäurediisooctylester, Sebacinsäuredioctylester und Adipinsäuredioctylester.

Wenn in der erfindungsgemäßen magnetorheologischen Formulierung als Basisöl ein gesättigter Polyolester von Carbonsäuren auf Basis von Neopentylglykol, Trimethylolpropan oder Pentaerythrit verwendet wird, so ist die Verwendung von Priolube^{®}-Marken der Firma Uniqema, insbesondere Priolube^{®} 3970, bevorzugt. Weitere ungesättigte Polyolester sind z. B. Priolube^{®} 2065 und 2089 der Firma Uniqema, Trimellithsäureester, z. B. Emkarate^{®} 8130 und 9130 der Firma Uniqema, und komplexe Ester, z. B. Priolube^{®} 1849 der Firma Uniqema.

Wenn als Basisöl in der magnetorheologischen Formulierung ein Poly-α-olefin verwendet wird, so ist die Verwendung von Durasyn^{®} 162 und von Durasyn^{®} 164 von der Firma Amoco bevorzugt. Besonders bevorzugt ist die Verwendung von Durasyn^{®} 162 von der Firma Amoco.

In einer weiteren bevorzugten Ausführungsform der vorliegenden Erfindung wird als Basisöl eine Mischung aus einem oben genannten Dicarbonsäuredialkylester und einem Poly-α-olefin verwendet.

Wie bereits erwähnt, sind Poly-α-olefine bevorzugte Basisöle in magnetorheologischen Formulierungen. Dieses liegt unter anderem an ihrer niedrigen Viskosität bei tiefen Temperaturen, was zur Folge hat, dass magnetorheologische Formulierungen basierend auf diesen Basisölen bei Temperaturen von mindestens -30 °C im feldfreien Zustand noch fließen und damit anwendbar sind. Demgegenüber sind Esteröle, wie beispielsweise der Diester Adipinsäuredinonylester, und die auf diesen Ölen basierenden magnetorheologischen Formulierungen häufig über einen breiten anwendungstechnisch relevanten Temperaturbereich viskoser, was insbesondere bei tiefen Temperaturen relevant ist.

Erfindungsgemäß wurde nunmehr gefunden, dass die Grundviskosität magnetorheologischer Formulierungen im feldfreien Zustand bei Verwendung von Ölmischungen aus Poly-α-olefinen und Esterölen, insbesondere Diesterölen, niedriger ist als bei der Verwendung der reinen Öle. Dieses überraschende Verhalten ist insbesondere bei tiefen Temperaturen besonders stark ausgeprägt und beispielsweise für Anwendungen im Automobilbereich vorteilhaft.

Innerhalb dieser Ausführungsform zur Ausbildung der Basisöle ist es bevorzugt, dass der Anteil des Dicarbonsäuredialkylesters höchstens 30 Gew.-%, vorzugsweise höchstens 28 Gew.%, besonders bevorzugt höchstens 26 Gew.-%, ganz besonders bevorzugt höchstens 24 Gew.-%, insbesondere höchstens 22 Gew.%, speziell höchstens 20 Gew.-%, jeweils bezogen auf die Ölmischung, beträgt. Ist der Dicarbonsäuredialkylester die höherviskose Ölkomponente in dem Basisöl, so ist es darüber hinaus weiter bevorzugt, dass der Anteil des Dicarbonsäuredialkylesters 2 bis 15 Gew.-%, vorzugsweise 3 bis 14 Gew.-%, besonders bevorzugt 3,5 bis 13 Gew.-%, ganz besonders bevorzugt 4 bis 12 Gew.-%, insbesondere 4,5 bis 11 Gew.-%, speziell 5 bis 10 Gew.-%, beträgt.

Als Dicarbonsäuredialkylester wird in diesen Ölmischungen mit Poly-α-olefinen vorzugsweise Sebacinsäuredüsooctylester, Sebacinsäuredioctylester, Adipinsäuredinonylester und Adipinsäuredioctylester, besonders bevorzugt Adipinsäuredinonylester, verwendet.

Als Poly-α-olefin wird in diesen Ölmischungen mit Dicarbonsäuredialkylester vorzugsweise Durasyn^{®} DS 164 und Durasyn^{®} DS 162 von der Firma Amoco, besonders bevorzugt Durasyn^{®} DS 162 von der Firma Amoco, verwendet.

Besonders bevorzugt ist die gleichzeitige Verwendung des Diesters Adipinsäuredinonylester und des Poly-α-olefins Durasyn^{®} DS 162 von der Firma Amoco.

Der Gehalt an Basisöl in der Gesamtformulierung sollte vorzugsweise 3 bis 50 Gew.%, besonders bevorzugt 5 bis 30 Gew.-%, besonders bevorzugt 7 bis 18 Gew.-%, betragen.

### Magnetisierbare Teilchen

Die erfindungsgemäße magnetorheologische Formulierung enthält mindestens ein magnetisierbares Teilchen, das ausgewählt ist aus der Gruppe, bestehend aus Eisenpulver, feinverteiltem Eisenpulver, wie Carbonyleisenpulver, welches aus Eisenpentacarbonyl hergestellt wird, wasser- oder gasverdüstem Eisenpulver, gecoatetem Eisenpulver, z. B. mit SiO₂-Partikein, mit anderen Metallen oder mit mindestens einem Polymer gecoatetem Eisenpulver und Mischungen der zuvor genannten magnetisierbaren Teilchen. Besonders bevorzugt ist dabei das so genannte Carbonyleisenpulver, das durch thermische Zersetzung von Eisenpentacarbonyl gewonnen wird.

Die Form der magnetisierbaren Teilchen kann gleichmäßig oder unregelmäßig sein. Beispielsweise kann es sich um sphärische, stäbchen- oder nadelförmige Teilchen handeln. Dabei ist die sphärische Form, d. h. die Kugelform oder eine der Kugelform ähnliche Form, besonders dann bevorzugt, wenn hohe Füllgrade angestrebt werden.

Wenn sphärische Teilchen verwendet werden, beträgt der mittlere Durchmesser [d₅₀] vorzugsweise 0,01 bis 1000 µm, besonders bevorzugt 0,1 bis 100 µm, insbesondere 0,5 bis 10 µm, speziell 1 bis 6 µm. Die vorgenannten Größenordnungen für den mittleren Durchmesser sind insbesondere deshalb vorteilhaft, weil sie zu magnetorheologischen Formulierungen führen, die eine verbesserte Redispergierbarkeit und eine verbesserte Fließfähigkeit im feldfreien Zustand bei tiefen Temperaturen aufweisen.

Wenn keine sphärischen Teilchen verwendet werden, beträgt die mittlere längste Ausdehnung der erfindungsgemäß vorgesehenen magnetisierbaren Teilchen vorzugsweise 0,01 bis 1000 µm, besonders bevorzugt 0,1 bis 500 µm, insbesondere 0,5 bis 100 µm.

Wenn als magnetisierbares Teilchen Metallpulver verwendet wird, so kann dieses beispielsweise durch Reduktion entsprechender Metalloxide erhalten werden. Gegebenenfalls schließt sich an die Reduktion noch ein Sieb- oder Mahlprozess an. Weitere Wege zur Herstellung entsprechend geeigneter Metallpulver ist die elektrolytische Abscheidung oder die Herstellung von Metallpulver über Wasser- oder Gasverdüsung.

Darüber hinaus ist auch die Verwendung von Mischungen magnetisierbarer Teilchen, insbesondere von magnetisierbaren Teilchen mit unterschiedlicher Teilchengröße, bevorzugt. Im Vergleich zu magnetorheologischen Formulierungen, welche Partikel mit monomodaler Größenverteilung enthalten, haben Formulierungen, beruhend auf Partikelmischungen unterschiedlicher Teilchengröße, eine niedrigere Viskosität, wenn kein Magnetfeld anliegt.

So ist in einer besonders bevorzugten Ausführungsform der vorliegenden Erfindung vorgesehen, dass im Wesentlichen sphärische Teilchen verwendet werden, die zwei unterschiedliche Durchmesser aufweisen. Dabei ist es weiter bevorzugt, dass die magnetisierbaren Teilchen jeweils einen mittleren Durchmesser [d₅₀] von 0,01 bis 1000 µm, besonders bevorzugt 0,1 bis 100 µm, insbesondere 0,5 bis 10 µm, speziell 1 bis 6 µm, aufweisen und das Verhältnis des mittleren Durchmessers der ersten Teilchenart zu dem mittleren Durchmesser der zweiten Teilchenart 1,1 bis 4,9 zu 1, weiter bevorzugt 1,5 bis 4,5 zu 1, besonders bevorzugt 1,75 bis 4,25 zu 1, ganz besonders bevorzugt 2 bis 4 zu 1, insbesondere 2,25 bis 3,75 zu 1, speziell 2,25 bis 3,0 zu 1, beträgt.

Der Gehalt der magnetisierbaren Partikel in der erfindungsgemäßen magnetorheologischen Formulierung beträgt vorzugsweise 30 bis 93 Gew.%, besonders bevorzugt 50 bis 93 Gew.-%, insbesondere 70 bis 93 Gew.-%.

### Dispergiermittel

Die erfindungsgemäße magnetorheologische Formulierung enthält vorzugsweise ein Dispergiermittel ausgewählt aus der Gruppe bestehend aus Dispergiermitteln auf Polymerbasis, insbesondere auf Polyesterbasis und Alkylphosphorsäureestern von langkettigen Alkoholen oder von Alkoholethoxylaten der allgemeinen Formel

Rₙ(EO)ₓ

mit n = 8 bis 18 und x = 0 bis 20, besonders bevorzugt n = 8 bis 18 und x = 0 bis 10, insbesondere n = 8 bis 18 und x = 0 bis 5 oder Mischungen der zuvor genannten Dispergiermittel.

Wenn als Dispergiermittel ein polymeres Dispergiermittel (Dispergiermittel auf Polymerbasis) verwendet wird, so ist die Verwendung von Polyestern, insbesondere von Polyhydroxystearinsäure und von Alkydharzen, besonders bevorzugt. Beispielhaft sind hierfür die Produkte Solsperse^{®} 21000 der Firma Avecia und Borchi^{®} Gen 911 der Firma Borchers genannt.

Die Dispergiermittel sind in der erfindungsgemäßen Formulierung vorzugsweise in einer Menge von 0,01 bis 10 Gew.-%, besonders bevorzugt 0,05 bis 3 Gew.-%, insbesondere 0,1 bis 2 Gew.-%, jeweils bezogen auf die magnetorheologische Formulierung, enthalten.

Die genannten Dispergiermittel ermöglichen innerhalb der erfindungsgemäßen magnetorheologischen Formulierung eine gute Redispergierbarkeit nach Sedimentation der magnetisierbaren Partikel.

Durch Verwendung von unter anderem polymeren Dispergiermitteln kann ein gutes Fließverhalten der magnetorheologischen Formulierung bei tiefen Temperaturen selbst bei hoher Beladung mit magnetisierbaren Partikeln von beispielsweise 90 Gew.-% gewährleistet werden. Typischerweise liegen die Schubspannungen von 90 Gew.-%igen Formulierungen bei -30 °C im feldfreien Zustand bei einer Schergeschwindigkeit von 40 s⁻¹ unter 1000 Pa, insbesondere sogar unter 800 Pa.

### Thixotropiermittel

Die erfindungsgemäße magnetorheologische Formulierung enthält vorzugsweise mindestens ein Thixotropiermittel auf der Basis von hydrophob modifizierten Schichtsilikaten.

Das Absetzen der magnetisierbaren Partikel innerhalb der erfindungsgemäßen magnetorheologischen Formulierung kann dadurch minimiert werden, dass man ein thioxotropes Netzwerk ausbildet. Ein thixotropes Netzwerk kann in dem magnetorheologischen Fluid der vorliegenden Erfindung gebildet werden durch den Einsatz der zuvor genannten thixotropen Zusatzmittel. Im Rahmen der vorliegenden Erfindung ist es besonders bevorzugt, wenn die hydrophob modifizierten Schichtsilikate sich vom Hectorit-, Bentonit- oder vom Smectit-Typ ableiten. Besonders bevorzugt sind dabei die Schichtsilikate der Bentone^{®}-Reihe der Firma Elementis. Darüber hinaus weiter bevorzugt sind Bentone^{®} SD-1, SD-2 und SD-3, insbesondere Bentone^{®} SD-3, welches ein organisch modifizierter Hectorit ist. Die Thixotropiermittel sind in der vorliegenden magnetorheologischen Formulierung in einer Menge von 0,1 bis 2 Gew.-%, enthalten.

Die magnetorheologische Flüssigkeit der vorliegenden Erfindung kann wahlweise andere Additive enthalten, beispielsweise Gleitmittel wie Teflonpulver, Molybdänsulfid oder Graphitpulver, Korrosionsinhibitoren, extreme pressure Additive, Anti-Verschleiß-Additive und Antioxidantien.

Gegenstand der vorliegenden Erfindung ist zudem ein Verfahren zur Herstellung der erfindungsgemäßen magnetorheologischen Flüssigkeiten, wonach in einem Basisöl, gegebenenfalls in Anwesenheit eines Thixotropiermittels und eines Dispergiermittels, die erfindungsgemäß vorgesehenen magnetisierbaren Teilchen dispergiert werden.

Im Allgemeinen erfolgt die Herstellung so, dass zunächst das Basisöl oder die Basisöl-Mischung vorgelegt und dann mit dem erfindungsgemäß vorgesehenen Dispergiermittel, Thixotropiermittel und gegebenenfalls weiteren Additiven versehen wird. Anschließend wird das resultierende Gemisch mit einem geeigneten Rühraggregat homogenisiert. Anschließend werden dann die magnetisierbaren Teilchen zugegeben und wiederum homogenisiert. Auch diese zweite Homogenisierung erfolgt vorzugsweise mit Hilfe eines geeigneten Rühraggregats. Wahlweise wird die resultierende Formulierung unter Vakuum entgast.

Weiterer Gegenstand der vorliegenden Erfindung ist zudem die Verwendung der erfindungsgemäßen magnetorheologischen Flüssigkeiten für Anwendungen in Dämpfern, Kupplungen, Bremsen, und anderen steuerbaren Geräten, wie insbesondere Haptic Devices, Crashabsorbern, Steer-by-Wire-Lenksystemen, Gear- und Brake-by-Wire-Systemen, Dichtungen, Haltesystemen, Prothesen, Fitnessgeräten oder Lagern.

Ein weiterer Gegenstand der vorliegenden Erfindung sind Dämpfer, Kupplungen, Bremsen, und andere steuerbare Geräte, wie insbesondere Haptic Devices, Crashabsorber, Steer-by-Wire-Lenksysteme, Gear- und Brake-by-Wire-Systeme, Dichtungen, Haltesysteme, Prothesen, Fitnessgeräte oder Lager enthaltend mindestens eine der erfindungsgemäßen magnetorheologischen Flüssigkeiten.

Die vorliegende Erfindung wird anhand der nachstehenden Beispiele näher erläutert.

### Ausführungsbeispiele

### 1. Prüfmethoden

### A) Redispergierbarkeit:

Die Formulierung wird 15 Minuten in einer Zentrifuge bei 4000 U/min. geschleudert.
Hierbei treten Zentrifugalkräfte von 2000-facher Erdbeschleunigung auf. Nach Sedimentation der magnetisierbaren Partikel wird die Redispergierbarkeit geprüft. Hierzu wird ein Laborspatel in den sedimentierten Bodensatz gesteckt und um 180 ° gedreht.
Dabei wird der Widerstand, welcher der Bewegung des Spatels entgegenwirkt, qualitativ beurteilt.

### B) Fließverhalten bei -40 °C:

Die Formulierung wird 24 Stunden in einem verschraubbaren Glas bei -40 °C belassen. Durch Kippen des Glases wird das Fließverhalten beurteilt. Außerdem wird ein Laborspatel in die Formulierung gesteckt und um 180 ° gedreht. Dabei wird der Widerstand, welcher der Bewegung des Spatels entgegenwirkt, qualitativ beurteilt.

### C) Chemische Stabilität:

Die Formulierung wird 24 Stunden in einem verschraubbaren Glas bei 150 °C belassen. Anschließend werden Verfärbung des Basisöls und die Viskositätsänderung der Formulierung vor und nach der Temperaturbelastung bei 25 °C gemessen.

Chemische Veränderungen, die in erster Linie das Basisöl als Trägerflüssigkeit betreffen, werden mittels chromatographischer Methoden, die sich an der Chemie des Basisöls orientieren (z.B. Gaschromatographie, Hochdruckflüssigkeitschromatographie, Gelpermeationschromatographie), detektiert.

### D) Sedimentation:

Die magnetorheologischen Formulierungen werden in ein graduiertes Reagenzglas gefüllt und bei 20 °C die Sedimentation prozentual nach 28 Tagen abgelesen.

### 2. Herstellung der Formulierung

Das Dispergiermittel und die weiteren Additive werden im Öl gelöst. Anschließend wird das Thixotropiermittel zugegeben und mittels eines geeigneten Rühraggregats homogenisiert. Dann werden die magnetisierbaren Eisenpartikel zugegeben und der Ansatz wiederum mit Hilfe eines geeigneten Rühraggregats homogenisiert. Wahlweise wird die Formulierung anschließend unter Vakuum entgast.

### 3. Beispiele von magnetorheologischen Formulierungen

### a) Magnetorheologische Formulierung, bestehend aus

- 10,5 Gew.-% Trimethylolpropan-tricarbonsäureester, wobei die Carbonsäure eine Kettenlänge von C8 - C10 hat (Priolube^{®} 3970) als Basisöl;
- 85 Gew.-% Carbonyleisenpulver mit einer durchschnittlichen Partikelgröße von 5 µm als magnetisierbare Teilchen;
- 4 Gew.-% eines Gemisches aus Phosphorsäuremonoester und Phosphorsäurediester eines C13/15-Alkoholethoxylats mit 3 Ethylenoxideinheiten als Dispergiermittel;
- 0,5 Gew.-% eines hydrophob modifizierten Hektorit-Schichtsilikats (Bentone^{®} SD-3) als Thixotropiermittel.

Die Formulierung lässt sich nach Sedimentation sehr gut redispergieren.

### b) Magnetorheologische Formulierung, bestehend aus

- 14,2 Gew.-% Adipinsäure-dinonylester als Basisöl;
- 85 Gew.-% Carbonyleisenpulver mit einer durchschnittlichen Partikelgröße von 5 µm als magnetisierbare Teilchen;
- 0,3 Gew.-% Polyhydroxystearinsäure (Solsperse^{®} 21000) als Dispergiermittel;
- 0,5 Gew.% eines hydrophob modifizierten Hektorit-Schichtsilikats (Bentone^{®} SD-3) als Thixotropiermittel.

Die Formulierung lässt sich nach Sedimentation sehr gut redispergieren, zeigt geringe Sedimentationsneigung, hohe übertragbare Schubspannung und ist in einem breiten Temperaturbereich zwischen mindestens -40 °C und 150 °C anwendbar.

### c) Magnetorheologische Formulierung, bestehend aus

- 11,4 Gew.% Poly-α-olefin Durasyn^{®}162 als Basisöl;
- 88 Gew.-% Carbonyleisenpulver mit einer durchschnittlichen Partikelgröße von 4 µm als magnetisierbare Teilchen;
- 0,3 Gew.-% Alkydharz Borchi^{®}Gen 911 als Dispergiermittel;
- 0,3 Gew.-% eines hydrophob modifizierten Hektorit-Schichtsilikats (Bentone^{®} SD-3) als Thixotropiermittel.

Die Formulierung lässt sich nach Sedimentation sehr gut redispergieren, zeigt geringe Sedimentationsneigung, hohe übertragbare Schubspannung und ist in einem breiten Temperaturbereich zwischen mindestens -40 °C und 150 °C anwendbar.

### d) Magnetorheologische Formulierung, bestehend aus

- 11,1 Gew.-% Poly-α-olefin Durasyn^{®}162 / Adipinsäuredinonylester (8 : 2) als Basisöl;
- 88 Gew.-% Carbonyleisenpulver mit einer durchschnittlichen Partikelgröße von 4 µm als magnetisierbare Teilchen;
- 0,6 Gew.-% Alkydharz Borchi^{®}Gen 911 als Dispergiermittel;
- 0,3 Gew.-% eines hydrophob modifizierten Hektorit-Schichtsilikats (Bentone^{®} SD-3) als Thixotropiermittel.

Die Formulierung lässt sich nach Sedimentation sehr gut redispergieren, zeigt hohe übertragbare Schubspannung und ist in einem breiten Temperaturbereich zwischen mindestens -40 °C und 150 °C anwendbar.

### 4. Magnetorheologische Formulierungen mit beschichteten magnetisierbaren Teilchen

Es wurde der Einfluss von Siliziumdioxid-Partikeln (SiO₂-Partikel als Beschichtungsmaterial für die Eisenpartikel (CEP) auf die Redispergierbarkeit nach Sedimentation und auf das Fließverhalten bei tiefer Temperatur untersucht.

Die folgenden Tabellen zeigen, dass eine Beschichtung der magnetisierbaren Teilchen mit SiO₂ vorteilhaft ist hinsichtlich der Redispergierbarkeit und des Tieftemperaturfließverhaltens:

| Beispiel | CEP [Gew .-%] | d₅₀ CEP [µm] | CEP-Belegung | Poly-α-olefin DS 162 [Gew.-%] | Borchi^{®} Gen 911 [Gew.-%] | Bentone^{®} SD-3 [Gew.-%] | Redispergierbarkeit 15 min., 2000 g | Fließverhalten -40 °C |
|---|---|---|---|---|---|---|---|---|
| 1 | 82 | 5,0 | SiO₂ | 15,9 | 0,6 | 1,5 | 0/+ | 0/+ |
| 2 | 82 | 6,0 | - | 15,9 | 0,6 | 1,5 | 0/- | 0/- |
| 3 | 88 | 2,0 | - | 11,1 | 0,6 | 0,3 | -- | + |
| 4 | 88 | 1,7 | - | 11,1 | 0,6 | 0,3 | - | + |
| 5 | 88 | 4,0 | SiO₂ | 11,1 | 0,6 | 0,3 | 0 | + |

| Beispiel | CEP [Gew .-%] | d₅₀ CEP [µm] | CEP-Belegung | Diester Glissofluid^{®} A9 [Gew.-%] | Solsperse^{®} 21000 [Gew.-%] | Bentone^{®} SD-3 [Gew.-%] | Redispergier barkeit 15 min., 2000 g | Fließverhalten -40 °C |
|---|---|---|---|---|---|---|---|---|
| 6 | 85 | 2,0 | - | 14,2 | 0,3 | 0,5 | -- | 0 |
| 7 | 85 | 2,0 | - | 13,9 | 0,6 | 0,5 | -- | 0 |
| 8 | 85 | 5 | SiO₂ | 14,2 | 0,3 | 0,5 | 0 | ++ |

### Erläuterungen:

Redispergierbarkeit (15 min., 2000 g):
   - +:: gut redispergierbar
   - 0:: redispergierbar
   - -:: schwer redispergierbar
   - -:: nicht redispergierbar
Fließverhalten (-40 °C):
   - -:: fest
   - 0:: fließt sehr langsam
   - +:: dickflüssig
   - ++:: dünnflüssig

### 5. Einfluss des Thixotropiermittels auf das Tieftemperaturverhalten und die Redispergierbarkeit

Die nachfolgenden Beispiele zeigen, dass große Mengen an Thixotropiermittel, insbesondere an Betone^{®} SD-3, negativen Einfluss auf das Tieftemperaturfließvefialten und die Redispergierbarkeit haben.

| Beispiel | CEP [Gew.-%] | Poly-α-olefin DS 162 [Gew.-%] | Borchi^{®} Gen 911 [Gew.-%] | Bentone^{®} SD-3 [Gew.-%] | Viskosität [mPas] D=87 s⁻ 1 - 30 °C | Redispergierbarkeit (15 min., 2000 g, 20 °C) | Fließverhalten (-40 °C) | Sedimentation [%], 28 Tage 20 °C |
|---|---|---|---|---|---|---|---|---|
| 9* | 82 | 14,4 | 0,6 | 3 | fest** | | | 0 |
| 10 | 82 | 15,9 | 0,6 | 1,5 | 10300 | 0/+ | 0/+ | 4 |
| 11 | 85 | 14,21 | 0,29 | 0,5 | 4250 | 0/+ | ++ | 12 |

Erläuterungen:
   - *:: Vergleichsbeispiel (in Anlehnung an WO 01/03150)
Redispergierbarkeit (15 min., 2000 g):
   - +:: gut redispergierbar
   - 0:: redispergierbar
   - -:: schwer redispergierbar
   - --:: nicht redispergierbar
Fließverhalten (-40 °C):
   - -:: fest
   - 0:: fließt sehr langsam
   - +:: dickflüssig
   - ++:: dünnflüssig

### 6. Magnetorheologische Formulierungen mit Basisölmischungen

Die folgenden Formulierungen 12 bis 14 enthalten jeweils 88 Gew.-% Carbonyleisenpulver mit einem mittleren Durchmesser von 5 µm, 0,33 Gew.-% Bentone^{®} SD-3 als Thixotropiermittel und 0,6 Gew.-% Borchi^{®} Gen 911 als Dispergiermittel. Bestimmt wurde die Viskosität der Formulierung bei -30 °C und einer Schergeschwindigkeit von 39 s⁻¹.

| Formulierung | Basisöl | Viskosität [mPas] D=39s⁻¹,-30 °C |
|---|---|---|
| 12 | Poly-α-olefin Durasyn^{®} 162 | 12500 |
| 13 | Poly-α-olefin Durasyn^{®} 162 / Adipinsäuredinonylester (95 : 5) | 9800 |
| 14 | Poly-α-olefin Durasyn^{®} 162 / Adipinsäuredinonylester (90 : 10) | 7700 |

Die folgenden Formulierungen 15 bis 17 enthalten jeweils 85 Gew.-% Carbonyleisenpulver mit einem mittleren Durchmesser von 5 µm, 0,50 Gew.% Bentone^{®} SD-3 als Thixotropiermittel und 0,29 Gew.-% Borchi^{®} Gen 911 als Dispergiermittel. Bestimmt wurde die Viskosität der Formulierung bei -30 °C und einer Schergeschwindigkeit von 39 s⁻¹.

| Formulierung | Basisöl | Viskosität [mPas] D=39s⁻¹,-30°C |
|---|---|---|
| 15 | Poly-α-olefin Durasyn^{®} 162 | 6260 |
| 16 | Poly-α-olefin Durasyn^{®} 162 / Adipinsäuredinonylester (95 : 5) | 4700 |
| 17 | Poly-α-olefin Durasyn^{®} 162 / Adipinsäuredinonylester (90 : 10) | 4800 |

Weitere anwendungstechnisch relevante Eigenschaften, wie die Redispergierbarkeit der Formulierung nach Sedimentation, werden durch die Basisölmischungen nicht negativ beeinflusst.

## Patentansprüche

1. Magnetorheologische Formulierung,enthaltend
a) mindestens ein Basisöl, das ausgewählt ist aus der Gruppe bestehend aus Dicarbonsäuredialkylester, basierend auf linearen oder verzweigten Fettsäuren mit Kettenlängen von C₄ bis C₁₀ und linearen oder verzweigten Alkoholen mit Kettenlängen von C₄ bis C₁₀; gesättigten Polyolestern, basierend auf Neopentylglykol, Trimethylolpropan oder Pentaerythrit; Poly-αolefinen und Mischungen aus den oben genannten Dicarbonsäuredialkylestem und Poly-α-olefinen;
b) mindestens ein magnetisierbares Teilchen ausgewählt aus der Gruppe bestehend aus Eisenpulver, feinverteiltem Eisenpulver, wie Eisenpartikeln, die aus Eisenpentacarbonyl hergestellt werden, gas- und wasserverdüstem Eisenpulver, gecoatetem Eisenpulver und Mischungen der zuvor genannten magnetisierbaren Teilchen;
c) mindestens ein Dispergiermittel ausgewählt aus der Gruppe bestehend aus Dispergiermitteln auf Polymerbasis und Alkylphosphorsäureester von langkettigen Alkoholen oder von Alkoholethoxylaten der allgemeinen Formel
Rₙ(EO)ₓ
mit n = 4 bis 18 und x = 0 bis 20;
und
d) mindestens ein Thixotropiermittel auf der Basis von hydrophob modifizierten Schichtsilikäten, wobei der Gehalt des Thixotropiermittels auf Basis von hydrophob modifizierten Schichtsilikaten 0,1 bis 2 Gew.-% bezogen auf die Formulierung, beträgt

2. Magnetorheologische Formulierung nach Anspruch 1, **dadurch gekennzeichnet, dass** das Dispergiermittel Polyhydroxystearinsäure ist.

3. Magnetorheologische Formulierung nach Anspruch 1, **dadurch gekennzeichnet, dass** das Dispergiermittel ein Alkydharz ist.

4. Magnetorheologische Formulierung nach einem der Ansprüche 1 bis 3, **dadurch gekennzeichnet, dass** der Gehalt an Dispergiermittel in der Formulierung 0,01 bis 10 Gew.%, bezogen auf die Formulierung, beträgt.

5. Magnetorheologische Formulierung nach einem der Ansprüche 1 bis 4, **dadurch gekennzeichnet, dass** sich das Thixotropiermiftel auf Basis von hydrophob modifizierten Schichtsilikaten vom Hektorit-, Bentonit oder Smektit-Typ ableitet.

6. Magnetorheologische Formulierung nach einem der Ansprüche 1 bis 5, **dadurch gekennzeichnet, dass** die Formulierung Mischungen magnetisierbarer Teilchen mit unterschiedlicher Teilchengröße umfasst, wobei im Wesentlichen sphärische Teilchen verwendet werden, die zwei unterschiedliche Durchmesser aufweisen und das Verhältnis des mittleren Durchmessers der ersten Teilchenart zu dem mittleren Durchmesser der zweiten Teilchenart 1,1 bis 4,9 zu 1 beträgt.

7. Magnetorheologische Formulierung nach einem der Ansprüche 1 bis 6, **dadurch gekennzeichnet, dass** als Basisöl eine Mischung aus Poly-α-olefinen und Dicarbonsäuredialkylester verwendet wird.

8. Verfahren zur Herstellung der magnetorheologischen Formulierung gemäß einem der Ansprüche 1 bis 7, **dadurch gekennzeichnet, dass** man in dem Basisöl, gegebenenfalls in Anwesenheit eines Dispergiermittels und eines Thixotropiermittels, die magnetisierbaren Teilchen dispergiert.

9. Verwendung der magnetorheologischen Formulierung gemäß einem der Ansprüche 1 bis 7 in Dämpfern, Kupplungen, Bremsen und anderen steuerbaren Geräten, wie Fitnessgeräten, haptic devices, Haltesystemen, Crashabsorbern, Steer-by-Wire-Lenksysteme, Gear- und Brake-by-Wire-Systemen, Dichtungen, Prothesen und/oder Lagern.

10. Dämpfer, Kupplungen, Bremsen und andere steuerbare Geräte, wie Fitnessgeräte, haptic devices, Haltesysteme, Crashabsorber, Steer-by-Wire-Lenksysteme, Gear- und Brake-by-Wire-Systeme, Dichtungen, Prothesen und/oder Lager enthaltend mindestens eine der magnetorheologischen Formulierungen gemäß einem der Ansprüche 1 bis 7.

## Claims

1. A magnetorheological formulation comprising
a) at least one base oil which is selected from the group consisting of dialkyl dicarboxylates, based on linear or branched fatty acids having chain lengths of C₄ to C₁₀ and linear or branched alcohols having chain lengths of C₄ to C₁₀; saturated polyol esters, based on neopentylglycol, trimethylolpropane or pentaerythritol; poly-α-olefins and mixtures of the abovementioned dialkyl dicarboxylates and poly-α-olefins;
b) at least one magnetizable particle selected from the group consisting of iron powder, finely divided iron powder, such as iron particles which are prepared from iron pentacarbonyl, gas- and water-atomized iron powder, coated iron powder and mixtures of the abovementioned magnetizable particles;
c) at least one dispersant selected from the group consisting of polyester-based dispersants and alkylphosphoric esters of long-chain alcohols or of alcohol ethoxylates of the general formula
Rₙ(EO)ₓ
where n = 4 to 18 and x = 0 to 20;
and
d) at least one thixotropic agent based on hydrophobically modified sheet silicates, wherein the content of the thixotropic agent based on hydrophobically modified sheet silicates is from 0.1 to 2% by weight, based on the formulation.

2. The magnetorheological formulation according to claim 1, wherein the dispersant is polyhydroxystearic acid.

3. The magnetorheological formulation according to claim 1, wherein the dispersant is an alkyd resin.

4. The magnetorheological formulation according to any of claims 1 to 3, wherein the content of dispersant in the formulation is from 0.01 to 10% by weight, based on the formulation.

5. The magnetorheological formulation according to any of claims 1 to 4, wherein the thixotropic agent based on hydrophobically modified sheet silicates is derived from the hectorite, bentonite or smectite type.

6. The magnetorheological formulation according to any of claims 1 to 5, wherein the formulation comprises mixtures of magnetizable particles of different particle sizes, substantially spherical particles which have two different diameters being used and the ratio of the median diameter of the first particle type to the median diameter of the second particle type being from 1.1 to 4.9:1.

7. The magnetorheological formulation according to any of claims 1 to 6, wherein the base oil used is a mixture of poly-α-olefins and dialkyl dicarboxylates.

8. A process for the preparation of the magnetorheological formulation according to any of claims 1 to 7, wherein the magnetizable particles are dispersed in the base oil, optionally in the presence of a dispersant and of a thixotropic agent.

9. The use of the magnetorheological formulation according to any of claims 1 to 7 in shock absorbers, clutches, brakes and other controllable devices, such as fitness devices, haptic devices, retaining systems, crash absorbers, steer-by-wire steering systems, gear- and brake-by-wire systems, seals, prostheses and/or bearings.

10. Shock absorbers, clutches, brakes and other controllable devices, such as fitness devices, haptic devices, retaining systems, crash absorbers, steer-by-wire steering systems, gear- and brake-by-wire systems, seals, prostheses and/or bearings comprising at least one of the magnetorheological formulations according to any of claims 1 to 7.

## Revendications

1. Formulation magnétorhéologique, contenant
a) au moins une huile de base qui est choisie dans le groupe constitué par les esters dialkyliques d'acides dicarboxyliques, à base d'acides gras linéaires ou ramifiés présentant des longueurs de chaîne de C₄ à C₁₀ et d'alcools linéaires ou ramifiés présentant des longueurs de chaîne de C₄ à C₁₀; les polyolesters saturés, à base de néopentylglycol, de triméthylolpropane ou de pentaérythritol; les poly-α-oléfines et les mélanges des esters dialkyliques des acides dicarboxyliques susmentionnés et des poly-α-oléfines ;
b) au moins une particule magnétisable choisie dans le groupe constitué par la poudre de fer, la poudre de fer finement répartie, telles que des particules de fer qui sont préparées à partir de pentacarbonyle de fer, la poudre de fer vaporisée par un gaz ou l'eau, la poudre de fer revêtue et les mélanges des particules magnétisables susmentionnées ;
c) au moins un dispersant choisi dans le groupe constitué par les dispersants à base de polymères et d'esters des acides alkylphosphoriques d'alcools à longue chaîne ou d'éthoxylates d'alcools de formule générale
Rₙ(EO)ₓ
avec n = 4 à 18 et x = 0 à 20 ; et
d) au moins un agent thixotropique à base de silicates à couches modifiés de manière hydrophobe, la teneur en agent thixotropique à base de silicates à couches modifiés de manière hydrophobe étant de 0,1 à 2% en poids par rapport à la formulation.

2. Formulation magnétorhéologique selon la revendication 1, **caractérisée en ce que** le dispersant est l'acide polyhydroxystéarique.

3. Formulation magnétorhéologique selon la revendication 1, **caractérisée en ce que** le dispersant est une résine alkyde.

4. Formulation magnétorhéologique selon l'une quelconque des revendications 1 à 3, **caractérisée en ce que** la teneur en dispersant dans la formulation est de 0,01 à 10% en poids, par rapport à la formulation.

5. Formulation magnétorhéologique selon l'une quelconque des revendications 1 à 4, **caractérisée en ce que** l'agent thixotropique à base de silicates à couches modifiés de manière hydrophobe est dérivé des types hectorite, bentonite ou smectite.

6. Formulation magnétorhéologique selon l'une quelconque des revendications 1 à 5, **caractérisée en ce que** la formulation comprend des mélanges de particules magnétisables présentant différentes grosseurs de particules, des particules sphériques étant essentiellement utilisées, qui présentent deux diamètres différents et le rapport du diamètre moyen du premier type de particules au diamètre moyen du deuxième type de particules étant 1,1 à 4,9:1.

7. Formulation magnétorhéologique selon l'une quelconque des revendications 1 à 6, **caractérisée en ce qu'**on utilise comme huile de base un mélange de poly-α-oléfines et d'esters dialkyliques des acides dicarboxyliques.

8. Procédé pour la préparation de la formulation magnétorhéologique selon l'une quelconque des revendications 1 à 7, **caractérisé en ce qu'**on disperse les particules magnétisables dans l'huile de base, le cas échéant en présence d'un dispersant et d'un agent thixotropique.

9. Utilisation de la formulation magnétorhéologique selon l'une quelconque des revendications 1 à 7 dans des amortisseurs, des embrayages, des freins et d'autres appareils pilotables, tels que les appareils de fitness, les dispositifs haptiques, les systèmes de retenue, les absorbeurs d'impacts, les systèmes de direction "Steer-by-Wire" (filoguidés), les systèmes "Gear-by-wire" (engrenages filoguidés) et "Brake-by-Wire" (freins filoguidés), les joints, les prothèses et/ou les paliers.

10. Amortisseurs, embrayages, freins et autres appareils pilotables, tels que les appareils de fitness, les dispositifs haptiques, les systèmes de retenue, les absorbeurs d'impacts, les systèmes de direction "Steer-by-Wire" (filoguidés), les systèmes "Gear- by-wire" (engrenages filoguidés) et "Brake-by-Wire" (freins filoguidés), les joints, les prothèses et/ou les paliers contenant au moins une des formulations magnétorhéologiques selon l'une quelconque des revendications 1 à 7.
